Europäisches Patentamt

European Patent Office

Office européen des brevets

(11) Publication number: **0 401 187**
**A2**

## (12) EUROPEAN PATENT APPLICATION

(21) Application number: **90850214.9**

(22) Date of filing: **25.05.90**

(51) Int. Cl.5: **B22F 7/08, B22F 3/00**

(30) Priority: **01.06.89 SE 8901986**

(43) Date of publication of application:
**05.12.90 Bulletin 90/49**

(84) Designated Contracting States:
**AT BE CH DE FR GB IT LI**

(71) Applicant: **ABB STAL AB**

**S-612 20 Finspâng(SE)**

(72) Inventor: **Ragnar, Ekbom**
**Svedjevägen 8**
**S-612 20 Finspang(SE)**

(74) Representative: **Gulliksson, Jonas et al**
**Ström & Gulliksson AB Studentgatan 1 P.O.**
**Box 4188**
**S-203 13 Malmö(SE)**

(54) **Method for reconstruction of blades and vanes in steam turbines at existing erosion damages.**

(57) Method in reconstructing blades and vanes in steam turbines at existing erosion damages. After removal of the portion of the blade or vane having erosion damages, a replacement portion of a material that can be easily melt or dissolved, is built up on the blade or vane, said portion replacing the original profile of the blade or vane. Around the blade or vane thus reconstructed a graphite mold is provided having an ingot, said replacement portion being removed by melting or dissolving the material thereof. A metal powder is hot pressed isostatically in the remaining cavity in the graphite mold, said mold then being 16 removed from the blade or vane reconstructed to a mono- lithic body.

FIG. 1

EP 0 401 187 A2

# METHOD FOR RECONSTRUCTION OF BLADES AND VANES IN STEAM TURBINES AT EXISTING EROSION DAMAGES

The invention relates to a method for reconstruction of blades and vanes in steam turbines at existing erosion damages.

In the outlet of steam turbines there are formed water droplets which erode the edges of the blades and vanes. At present attempts are made to overcome this drawback in different manners. Either an edge portion of the blade or vane is hardened or there is joined by soldering en edge portion of a harder material than the material of the rest of the blade or vane, for example the cobolt alloy which is available under the registered trademark STELLITE. No doubt it is possible to obtain by these measures a delay of erosion coming into existence but the measures involve substantial drawbacks: in hardening as well as soldering strains will arise in the blade or vane, which in turn may lead to cracking of the blade or vane, and as far as soldered edge portions are concerned there is also the risk of the soldering failing. Moreover, both these methods involve large costs as far as large turbines are concerned, for example such turbines as are used in nuclear power stations and operate at large steam volumes and low steam temperatures.

The purpose of the invention is to solve the erosion problem accounted for above by a less expensive and also improved method by obviating said drawbacks of existing methods, and for this purpose there is provided a method of the kind referred to above, which has obtained according to the invention the features of claim 1.

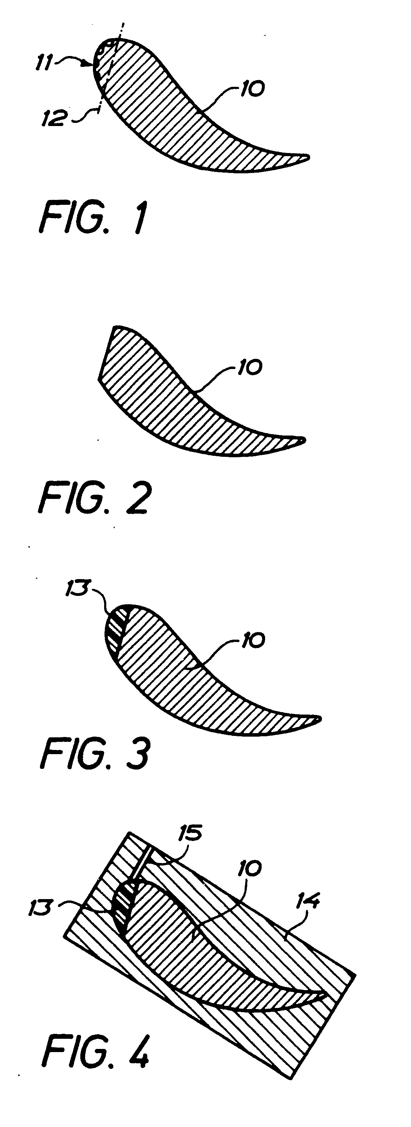

In order to explain the invention in more detail reference is made to the accompanying drawing wherein Figures 1-7 in cross-sectional view disclose a steam turbine blade in different phases of the method of the invention.

It is assumed that the steam turbine blade 10, Figure 1, is made of such metal or metal alloy which generally is used for such blades. It is also assumed that at an edge 11 of the blade there are erosion damages which require repair.

When the method of the invention is applied the damaged portion is removed by milling, for example along the dot-and-dash line 12, Figure 1, so that the blade will be as shown in Figure 2. Then, the blade is rebuilt to the original profile by adding a portion 13 of wax, plastics or alloy having a low melting temperature, Figure 3.

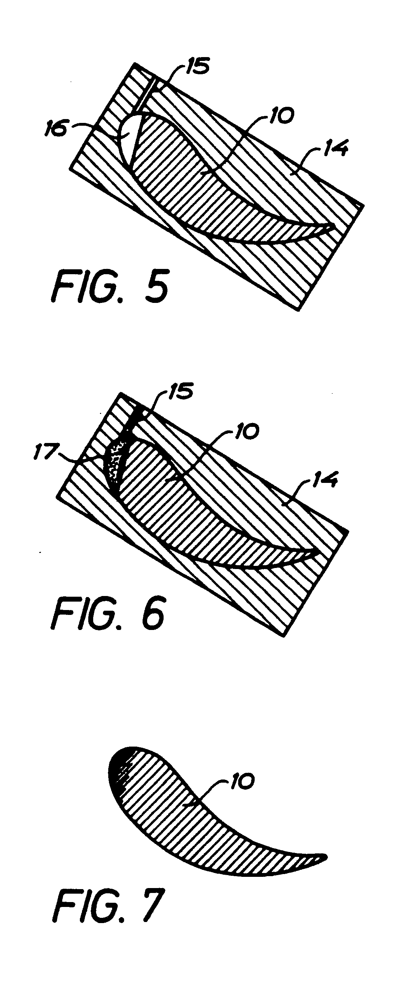

Around the blade thus "reconstructed" a mold 14 of graphite powder and cement is provided said mold having an ingot 15 in the region of the applied portion of wax, plastics or alloy, Figure 4, said portion then being removed again from the blade by the wax or alloy being melted or by the plastics being dissolved in a solvent, a cavity 16 remaining in the mold, said cavity having the same dimensions and the same profile as the portion having been removed, Figure 5. A powder 17 of metal or metal alloy which can be the same as that from which the blade is made or can be harder than the metal or metal alloy of the blade, is compacted in the mold cavity, Figure 6, the mold with the blade and the metal powder enclosed therein then being located in a casing for isostatic hot pressing wherein the mold preferably is enclosed in a compacted powder of alumina or zirconium silicate. When the casing has been closed and evacuated in the conventional manner isostatic hot pressing is performed. The molding obtained by this procedure, which consists of a reconstructed blade having the original profile of the blade, is uncovered from the graphite mold by blasting said mold from the molding, Figure 7.

The reconstructed blade manufactured in this manner is a monolithic body, and there is no risk of cracking or losing of the portion that has been applied by the isostatic hot pressing when the turbine rotor in which the blade is used is operated.

## Claims

1. Method in reconstructing blades and vanes in steam turbines at existing erosion damages comprising the steps of removing the portion of the blade or vane having erosion damages, building on the blade or vane a replacement portion of a material that can be easily melt or can be dissolved, said portion replacing the original profile of the blade or vane, providing around the blade or vane thus reconstructed a graphite mold having an ingot, removing said replacement portion by melting or dissolving the material thereof, isostatically hot pressing a metal powder in the remaining cavity in the graphite mold, and removing said mold from the blade or vane reconstructed to a monolithic body.

2. Method as in claim 1 wherein there is provided by the isostatic hot pressing a portion of the blade or vane, which is harder than the material of the rest of the blade or vane.

*FIG. 1*

*FIG. 2*

*FIG. 3*

*FIG. 4*

FIG. 5

FIG. 6

FIG. 7